# FASCICULE DE BREVET EUROPEEN

(11) **EP 2 747 041 B1**
(45) Date de publication et mention de la délivrance du brevet: **31.05.2017**
(21) Numéro de dépôt: 13196641.8
(22) Date de dépôt: 11.12.2013
(51) Int. Cl.: G07C 9/00, G07F 7/10, G06F 21/44, G06F 21/62, G06F 21/77

(54) **Procédé de sécurisation d'un dispositif apte à communiquer avec un lecteur selon deux protocoles d'authentification**
Sicherungsverfahren einer Vorrichtung, die in der Lage ist, mit einem Lesegerät über zwei Authentifizierungsprotokolle zu kommunizieren
Method for securing a device capable of communicating with a reader according to two authentication protocols

(30) Priorité: 19.12.2012 FR 1262367
(43) Date de publication de la demande: 25.06.2014
(73) Titulaire: OBERTHUR TECHNOLOGIES, 92700 Colombes (FR)
(72) Inventeur: Feraud, Alban, 92700 Colombes (FR)
(74) Mandataire: Delumeau, François Guy

(56) Documents cités:
- EP-A1- 0 973 134
- EP-A2- 1 575 005
- WO-A1-2004/032042
- WO-A1-2008/053095
- US-A- 4 879 645
- US-A1- 2010 180 118
- Anonymous: "MACHINE READABLE TRAVEL DOCUMENTS, TECHNICAL REPORT, Supplemental Access Control forMachine Readable Travel Documents, Version - 1.01", , 11 novembre 2010 (2010-11-11), XP055013829, Extrait de l'Internet: URL:http://www2.icao.int/en/MRTD/Downloads /Technical Reports/Technical Report.pdf [extrait le 2011-12-02]

## Description

La présente invention se situe dans le domaine de la sécurisation de documents incorporant des dispositifs électroniques.

Elle trouve une application privilégiée mais non limitative dans le domaine des documents de voyage communiquant avec un lecteur, ou système d'inspection.

Dans le domaine des documents de voyage, on connait en particulier le protocole de contrôle d'accès BAC (Basic Access Control défini par l'OACI dans le document 9303) apte à permettre l'authentification d'un document de voyage par un lecteur de ce document et à chiffrer les communications entre un microcircuit incorporé dans le document et ce lecteur de ce document afin de protéger l'accès à des données d'authentification et des données sécurisées mémorisées par ce microcircuit, par exemple des données biométriques. Le protocole BAC permet aussi d'assurer l'authenticité et l'intégrité des données échangées entre le lecteur et le microcircuit.

Ce protocole BAC utilise, lors de l'authentification, un mécanisme de cryptographie symétrique. Il s'appuie en outre sur deux clés d'accès dérivées de la zone MRZ (Machine Readable Zone) dont les données sont facilement accessibles et généralement imprimées directement sur le document de voyage, à savoir le numéro du document, sa date d'expiration et la date de naissance du porteur du document. En ce sens, il est relativement peu sécurisé.

Un protocole additionnel EAC (Extended Access Control) a été proposé en 2006 pour les passeports de la zone Schengen dits de deuxième génération. Ce protocole EAC, défini par le German Federal Office for Information Security (BSI) dans le rapport technique TR-03110 conserve le protocole BAC pour l'accès à certaines données dites « données habituelles » et le complète en s'appuyant sur une cryptologie avancée pour protéger de manière forte l'accès aux données biométriques, et notamment l'accès aux empreintes digitales, considérées comme les plus sensibles dans l'Union Européenne.

Le protocole PACE (Password Authenticated Connection Establishment) défini dans le document TR SAC v1.0 (Supplemental Access Control) du 11 novembre 2010 par le comité ISO/IEC JTC1 SC17 WG3/TF5 introduit des sécurités supplémentaires au regard du protocole BAC. En effet, le protocole PACE utilise, lors de la phase d'authentification, un mécanisme de cryptographie asymétrique, et utilise deux clés partagées entre le microcircuit du document et le lecteur, l'une pour le chiffrement des communications, l'autre pour protéger l'intégrité et l'authenticité des données, ces clés n'étant pas dérivées de données de la zone MRZ.

Le protocole PACE devra être implémenté dans tous les documents de voyage émis à partir de fin 2014 ; lorsqu'un document de voyage supportera à la fois le protocole PACE et le protocole BAC, la communication avec le lecteur devra utiliser la technologie PACE, plus sécurisée, si le lecteur supporte lui-même le protocole PACE.

Cependant, pour des raisons de comptabilité ascendantes, au moins pendant toute une période de migration, les protocoles BAC et PACE seront amenés à coexister dans les documents de voyage. On notera que la date à laquelle le protocole BAC ne sera plus implémenté dans les documents de voyage n'est pas définie à ce jour, et que ce protocole sera utilisé pendant dix ans après cette date, les documents de voyage étant généralement valables pendant une telle durée.

On peut penser que la technologie BAC moins sécurisée que la technologie PACE, sera la cible d'attaques visant à mettre en péril l'anonymat et la protection de la vie privée du porteur du document en procédant comme suit :
- 1-attaques par dictionnaire. Ces attaques hors ligne consistent à analyser des enregistrements de transaction obtenus par un attaquant (soit par interception, soit par interaction directe entre le document de voyage et l'attaquant). Elles visent à retrouver la clef statique du document (MRZ) qui est l'identifiant unique du document.
- 2-une fois la MRZ connue :
   ∘ Déterminer si la personne associée à la MRZ est ou était présente à un endroit donné et à un moment donné, en analysant l'enregistrement de transaction électronique interceptée, ou par interaction directe avec le document de voyage via un protocole BAC ou PACE.
   ∘ Retrouver les données chiffrées échangées à partir des transactions enregistrées.
Il a en effet été précisé qu'une fois la migration réalisée, c'est-à-dire lorsque les documents de voyage et les lecteurs supporteront le protocole PACE, ce dernier sera utilisé. Mais des personnes mal intentionnées pourront toujours utiliser la fonctionnalité BAC pour obtenir des enregistrements de transaction électronique et enregistrer de telles communications pour tenter de retrouver la MRZ et les données sensibles.

Un des buts de l'invention est de sécuriser les documents de voyage supportant les protocoles BAC et PACE, et éventuellement EAC.

De façon plus générale, un des buts de l'invention est de sécuriser un dispositif apte à communiquer avec un lecteur selon deux protocoles d'authentification, en particulier lorsque ceux-ci présentent des niveaux de sécurisation différents et permettant d'acquérir les même droits d'accès auprès de la puce.

Le document intitulé « MACHINE READABLE TRAVEL DOCUMENTS, TECHNICAL REPORT, Supplemental Access Control for Machine Readable Travel Documents, Version - 1.01 » (11 novembre 2010) traite des mécanismes de contrôle BAC et EAC dans le cadre des documents de voyage lisibles par une machine.

Le document US 2010/0180118 A1 divulgue un dispositif de traitement d'information équipé d'une pluralité d'unités d'algorithme de chiffrage, ces dernières étant respectives capables d'effectuer une authentification mutuelle avec un dispositif externe en utilisant des méthodes de chiffrage ou des clés de chiffrage différentes. Une unité d'algorithme de chiffrage peut désactiver une autre unité d'algorithme de chiffrage conformément à une information de contrôle de désactivation lorsqu'une authentification mutuelle réussit avec un dispositif externe.

### Objet et résumé de l'invention

L'invention est définie dans le jeu de revendications ci-joint.

Plus précisément, l'invention concerne un dispositif électronique comportant :
- des moyens pour mémoriser au moins une donnée sécurisée;
- des moyens pour communiquer avec un lecteur pour la mise en oeuvre d'un premier ou d'un deuxième protocole d'authentification, chacun desdits protocoles étant activable et capable d'accéder à ladite au moins une donnée sécurisée ;
- des moyens aptes à bloquer le premier protocole mais pas le deuxième protocole sur réception d'une information.

Autrement dit, et d'une façon générale, l'invention vise un mécanisme permettant de bloquer uniquement l'un des deux protocoles d'authentification, l'autre restant utilisable, chacun de ces protocoles permettant d'accéder à des mêmes données sécurisées mémorisées dans une mémoire du microcircuit.

Le dispositif selon l'invention peut être constitué par un microcircuit (ou puce).

Dans un mode particulier de réalisation, les deux protocoles utilisent la même interface physique, par exemple une interface de communication sans fil, ou une interface de communication sans contact, par exemple de type NFC, par exemple conforme au protocole ISO/IEC 14443.

Dans un mode préféré de réalisation, le dispositif électronique selon l'invention comporte des moyens pour envoyer un message d'erreur audit lecteur sur réception d'une requête dudit lecteur lorsque le premier protocole est bloqué. Cette requête peut par exemple être une requête de défi ou une requête d'authentification mutuelle lors de la tentative de réalisation du protocole d'authentification qui a été bloqué.

Dans un mode particulier de réalisation du dispositif électronique selon l'invention, le premier protocole d'authentification est moins sécurisé que le deuxième protocole d'authentification.

L'invention permet ainsi de bloquer le protocole d'authentification le moins sécurisé, le protocole d'authentification le plus sécurisé restant utilisable.

L'invention vise aussi un document de voyage, par exemple un document d'identité comportant un dispositif électronique tel que mentionné ci-dessus.

Dans un mode particulier de réalisation de l'invention, le premier protocole d'authentification est le protocole BAC et ledit deuxième protocole d'authentification est le protocole PACE, chacun de ces protocoles BAC et PACE permettant d'accéder à des mêmes données sécurisées, par aux données DG1, DG2, DG14, DG15, etc. et Security Object, comme décrit dans le document TR SAC v1.0 (Supplemental Access Control) du 11 novembre 2010 par le comité ISO/IEC JTC1 SC17 WG3/TF5 déjà mentionné. Le dispositif électronique selon l'invention comporte des moyens pour stocker une date de référence et l'information dont la réception entraîne le blocage du premier protocole représente une indication relative à la comparaison de cette date de référence avec la date courante.

Ce mode particulier de réalisation permet de bloquer automatiquement l'utilisation du premier protocole à la première utilisation du dispositif survenant après une date de référence mémorisée dans le dispositif.

La date courante peut être reçue du dispositif selon l'invention de différentes façons.

La date peut être comprise dans une commande reçue du lecteur.

Le dispositif selon l'invention peut aussi obtenir la date courante à partir des messages utilisés par protocole différent du premier et second protocoles précités). Par exemple, lorsque le dispositif selon l'invention est incorporé dans un document de voyage, les premier et deuxième protocoles étant les protocoles BAC et PACE, la date courante peut être reçue au cours d'une phase d'authentification conforme au protocole EAC.

L'invention vise aussi un procédé de sécurisation d'un dispositif électronique comportant des moyens pour mémoriser au moins une donnée sécurisée et des moyens pour communiquer avec un lecteur pour la mise en oeuvre d'un premier ou d'un deuxième protocole d'authentification, chacun desdits protocoles étant activable et capable d'accéder à ladite au moins une donnée sécurisée, ce procédé comportant :
- une étape de réception d'une information ; et
- une étape de blocage du premier protocole mais pas du deuxième protocole sur réception de cette information.

Les caractéristiques particulières du procédé de sécurisation selon l'invention sont identiques à celle du dispositif selon l'invention tel que mentionné ci-dessus.

Au vu de ce qui précède, on comprend que l'invention permet en particulier de bloquer l'usage du protocole BAC pour l'authentification du document de voyage, le chiffrement, la protection en intégrité et en authenticité des communications entre un lecteur et le microcircuit de ce document de voyage, et de forcer l'usage du protocole PACE :
- lorsque la date courante dépasse une date de référence mémorisée dans le document de voyage.

### Brève description des dessins

D'autres caractéristiques et avantages de la présente invention ressortiront de la description faite ci-dessous, en référence aux dessins annexés qui en illustrent quatre variantes de réalisation dépourvues de tout caractère limitatif. Sur les figures :
- les figures 1A à 1C illustrent une première variante de réalisation ;
- les figures 2A à 2C illustrent une deuxième variante de réalisation, constituant une réalisation de l'invention ;
- les figures 3A et 3B illustrent une troisième variante de réalisation ; et
- les figures 4A à 4C illustrent une quatrième variante de réalisation.

### Description détaillée

### a/ Première variante de réalisation

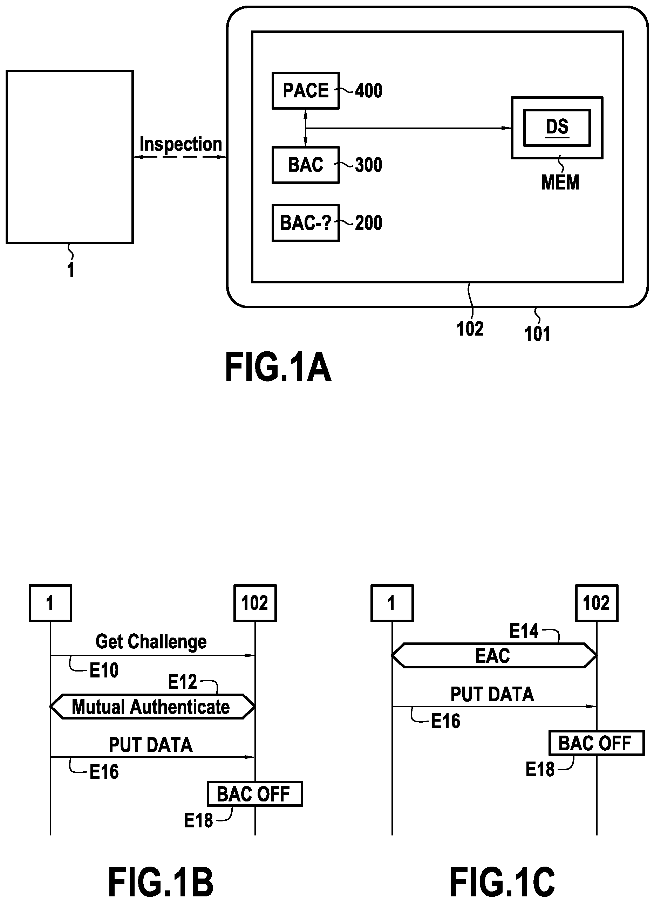

La figure 1A représente un document de voyage 101, par exemple un passeport, comportant un microcircuit 102 conforme à une première variante de réalisation, ce microcircuit comportant un module 300 apte à mettre en oeuvre le protocole BAC et un module 400 apte à mettre en oeuvre le protocole PACE pour protéger les communications avec un lecteur 1. Chacun de ces protocoles permet d'accéder à des mêmes données sécurisées DS mémorisées dans une mémoire MEM du microcircuit 102. Le protocole PACE peut toujours être utilisé mais le protocole BAC peut être bloqué.

A cet effet, le microcircuit 102 comporte une mémoire 200 mémorisant une variable binaire BAC_? pouvant prendre deux valeurs BAC_ON et BAC_OFF, représentant respectivement le fait que le protocole BAC est utilisable (autrement dit débloqué) ou inutilisable (autrement dit bloqué).

Lorsque le document de voyage est émis, la variable binaire BAC_? est initialisée avec la valeur BAC_ON de sorte que le protocole BAC peut être utilisé.

Dans ce mode de réalisation, le blocage du protocole BAC, autrement dit l'écriture de la valeur BAC OFF dans la variable binaire BAC_? se fait sur réception d'une commande externe de blocage BLOCK_BAC émise sous le contrôle de l'émetteur du document de voyage, typiquement sous le contrôle d'un fonctionnaire de l'Etat ayant émis le document de voyage.

Cette commande BLOCK_BAC peut par exemple être émise par un douanier qui inspecte le document de voyage au moyen du lecteur 1 lorsque le porteur du document de voyage quitte l'espace Schengen. Le blocage du protocole BAC n'entraîne pas le blocage du protocole PACE, si bien que le protocole PACE reste utilisable.

Dans le mode de réalisation décrit ici, l'émission de la commande de blocage BLOCK_BAC n'est possible qu'après authentification du fonctionnaire de l'Etat autorisé à émettre cette commande.

Cette authentification peut être mise en oeuvre selon différents protocoles.

Dans un premier mode de réalisation représenté à la figure 1B, l'authentification se fait conformément au protocole BAC en utilisant des clés d'authentification secrètes dédiées. Dans ce mode de réalisation l'authentification comporte une étape E10 d'envoi, par le lecteur, d'un défi (Get Challenge) au microcircuit 102 du document de voyage, et une étape E12 d'authentification mutuelle du lecteur et du document de voyage.

Dans un deuxième mode de réalisation représenté à la figure 1C, l'authentification peut être réalisée au cours d'une étape E14 conformément au protocole de type EAC. Dans ce mode de réalisation, l'entité autorisée à modifier la variable BAC_? peut par exemple utiliser une clef racine CVCA (Country Verifying Certification Authority) dédiée à cet usage CVCA ou des certificats CVC (Card Verifiable Certificate) possédant un rôle ID déterminé.

Dans ce premier et dans ce deuxième mode de réalisation, le commande de blocage BLOCK_BAC peut être une commande « PUT DATA » telle que définie par le protocole ISO/IEC 7816-4, envoyée par le lecteur 1 au microcircuit 102 au cours d'une étape E16.

Sur réception d'une telle commande, le microcircuit 102 bloque le protocole BAC (étape E18) de sorte que seul le protocole PACE peut être utilisé.

### b/ Deuxième variante de réalisation, constituant une réalisation de l'invention

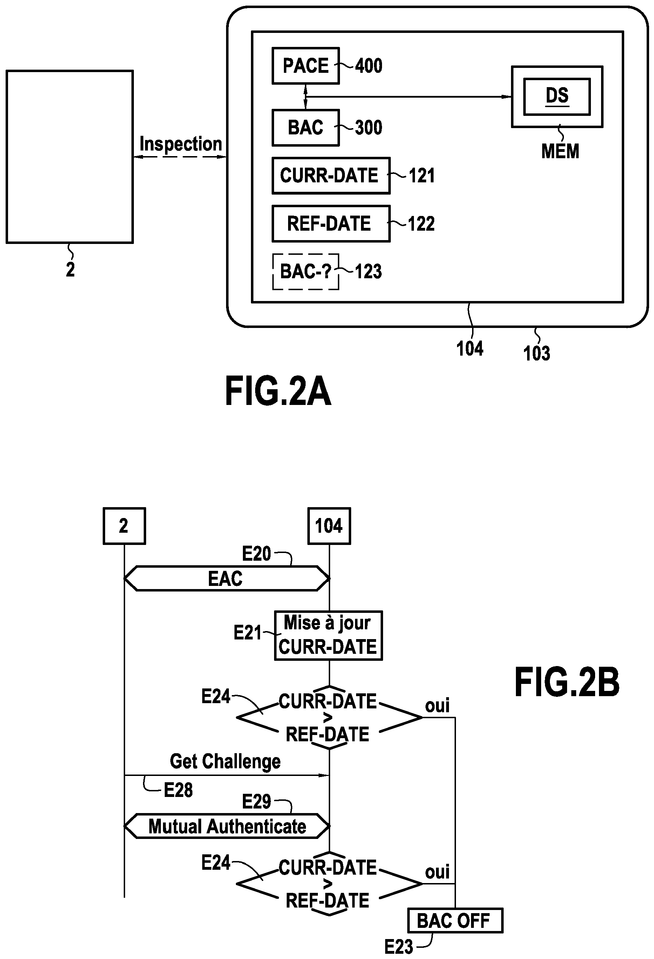

La figure 2A représente un document de voyage 103, comportant un microcircuit 104 conforme à une variante de réalisation selon l'invention, ce microcircuit 104 comportant un module 300 apte à mettre en oeuvre le protocole BAC et un module 400 apte à mettre en oeuvre le protocole PACE pour protéger les communications avec un lecteur 2. Chacun de ces protocoles permet d'accéder à des mêmes données sécurisées DS mémorisées dans une mémoire MEM du microcircuit 104.

Ce microcircuit 104 comporte une mémoire non volatile 121 comportant la date courante CURR_DATE et une mémoire non volatile 122 comportant une date de référence REF_DATE.

Dans cette variante de réalisation de l'invention, on bloque l'utilisation du protocole BAC si la date courante CURR_DATE dépasse la date de référence REF_DATE.

La mise à jour de la date courante CURR_DATE peut être effectuée de plusieurs façons.

Dans un premier mode de réalisation représenté à la figure 2B, la date courante CURR_DATE est mise à jour (étape E21) avec la date indiquée dans les données transmises au document de voyage lors de la phase d'authentification du protocole EAC (étape E20).

Par exemple, dans ce premier mode de réalisation, on compare directement les dates courante CURR_DATE et de référence REF_DATE, au cours d'une étape E24, afin de déterminer si le protocole BAC peut être utilisé ou s'il doit être bloqué.

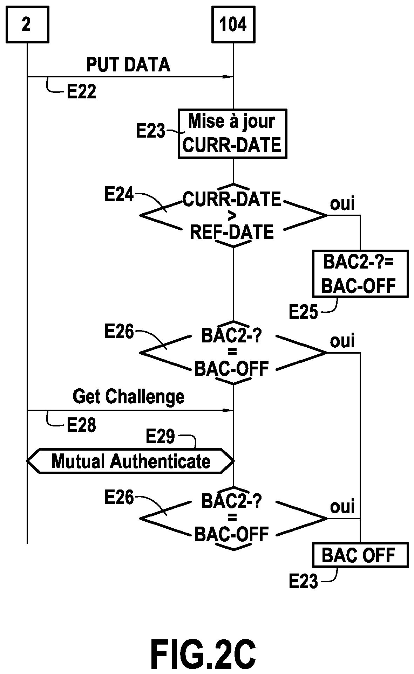

Dans un deuxième mode de réalisation représenté à la figure 2C, la date courante CURR_DATE est mise à jour (étape E23) par l'envoi d'une commande explicite (étape E22), par exemple une commande APDU. On peut par exemple utiliser la commande suivante :
- PUT DATA (INS=CA) comme défini par la norme ISO/IEC 7816-4 ; avec le paramètre P1P2=5F25 (date courante) comme défini par la norme ISO/IEC 7816-6.

Par exemple, dans ce deuxième mode de réalisation de cette deuxième variante, le microcircuit comporte une mémoire non volatile 123 optionnelle comportant une variable binaire BAC2_? pouvant prendre deux valeurs BAC_ON et BAC_OFF, représentant respectivement le fait que le protocole BAC est utilisable (autrement dit débloqué) ou inutilisable (autrement dit bloqué). Lorsque le document de voyage est émis, la variable binaire BAC2_? est initialisée avec la valeur BAC_ON et le protocole BAC peut être utilisé ; la variable binaire BAC2_? prend la valeur BAC_OFF (étape E25) lorsque la date courante CURR_DATE dépasse la date de référence REF DATE.

La comparaison de la variable binaire BAC2_? avec la valeur BAC_ON (étape E26), ou la comparaison de la date courante CURR_DATE avec la date de référence REF_DATE (étape E24) peut être effectuée au moment de la mise à jour de la date courante CURR_DATE ou lorsque le lecteur cherche à réaliser le protocole BAC.

Ces comparaisons peuvent en particulier être réalisées par le microcircuit 104 sur réception de la commande d'obtention de défi (étape E28, Get Challenge) ou sur réception de la commande d'authentification mutuelle (étape E29, Mutual Authenticate) comme représenté à la figure 2B.

Dans le mode de réalisation décrit ici, lorsqu'il ressort de l'étape E24 ou E26 de comparaison que le protocole BAC doit être bloqué, le protocole BAC est bloqué (étape E23) et un mot d'état d'erreur est retourné à la commande Get Challenge (INS = 84) et/ou Mutual Authenticate (INS = 82) précitée. Ce mot d'état peut par exemple être le code '6A81' ou '6D00' comme décrit dans ISO/IEC 7816-4.

### c/ Troisième variante de réalisation

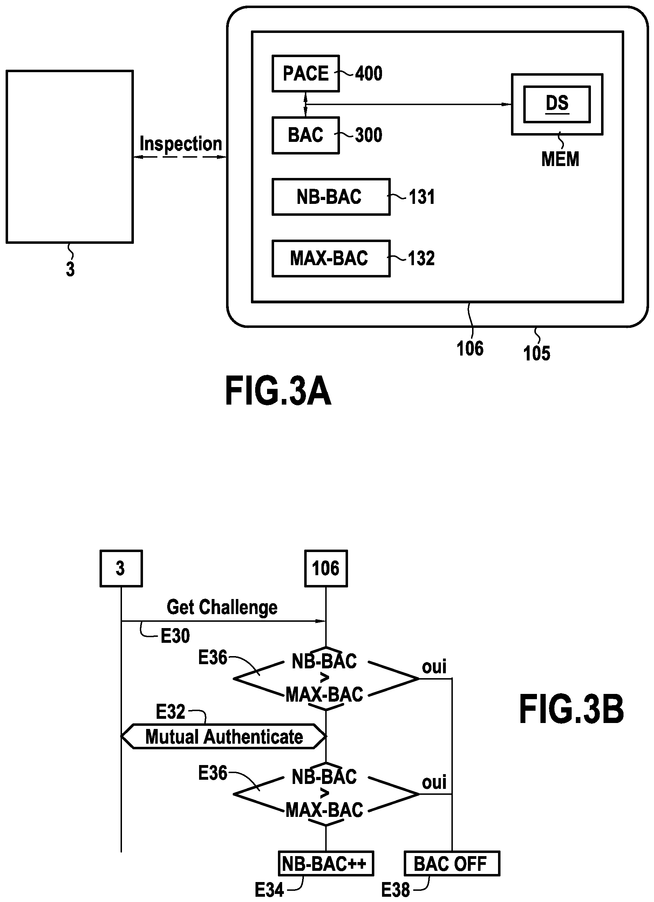

La figure 3A représente un document de voyage 105, comportant un microcircuit 106 conforme à une autre variante de réalisation, ce microcircuit 106 comportant un module 300 apte à mettre en oeuvre le protocole BAC et un module 400 apte à mettre en oeuvre le protocole PACE pour protéger les communications avec un lecteur 3. Chacun de ces protocoles permet d'accéder à des mêmes données sécurisées DS mémorisées dans une mémoire MEM du microcircuit 106.

Ce microcircuit 106 comporte une mémoire non volatile 131 comportant un compteur NB_BAC du nombre d'utilisations du protocole BAC, et une mémoire non volatile 132 comportant une valeur seuil MAX_BAC.

Dans ce mode de réalisation, on bloque l'utilisation du protocole BAC lorsque la variable NB_BAC dépasse la valeur seuil MAX_BAC.

La valeur NB_BAC est initialisée à 0 lorsque le document de voyage est émis et incrémenté d'une unité à chaque utilisation du protocole BAC.

Dans un mode particulier de réalisation représenté à la figure 3B, la variable NB_BAC est incrémentée au cours d'une étape E34 après les étapes E30 de réception des commandes d'obtention de défi (Get Challenge) et E32 d'authentification mutuelle (Mutual Authenticate), telles que définies dans le document 9303 de l'OACI.

Dans un premier mode de réalisation de cette troisième variante, on compare directement le compteur NB_BAC et la valeur seuil MAX_BAC afin de déterminer si le protocole BAC peut être utilisé ou s'il doit être bloqué.

Dans un deuxième mode de réalisation de cette troisième variante, le microcircuit comporte une mémoire non volatile 133 optionnelle comportant une variable binaire BAC3_? pouvant prendre deux valeurs BAC_ON et BAC_OFF, représentant respectivement le fait que le protocole BAC est utilisable (autrement dit débloqué) ou inutilisable (autrement dit bloqué). Lorsque le document de voyage est émis, la variable binaire BAC3_? est initialisée avec la valeur BAC_ON et le protocole BAC peut être utilisé ; la variable binaire BAC3_? prend la valeur BAC_OFF lorsque le compteur NB_BAC dépasse le seuil MAX_BAC.

La comparaison de la variable binaire BAC3_? avec la valeur BAC_ON (premier mode de réalisation), ou la comparaison du nombre d'utilisations du protocole BAC NB_BAC avec le seuil MAX_BAC (deuxième mode de réalisation), référencée E36 dans les deux cas, peut être effectuée juste après la mise à jour du compteur NB_BAC (étape E34) et/ou lorsque le lecteur cherche à utiliser le protocole BAC.

Comme cela est représenté à la figure 3B, ces comparaisons E36 peuvent en particulier être réalisées par le microcircuit 106 sur réception de la commande d'obtention de défi (étape E30, Get Challenge) ou sur réception de la commande d'authentification mutuelle (étape E32, Mutual Authenticate).

Dans le mode de réalisation décrit ici, lorsqu'il ressort de l'étape E36 de comparaison que le protocole BAC doit être bloqué (étape E38), un mot d'état d'erreur est retourné à la commande d'obtention de défi ou d'authentification mutuelle. Ce mot d'état peut par exemple être le code '6A81' ou '6D00' comme décrit dans ISO/IEC 7816-4.

### d/ Quatrième variante de réalisation

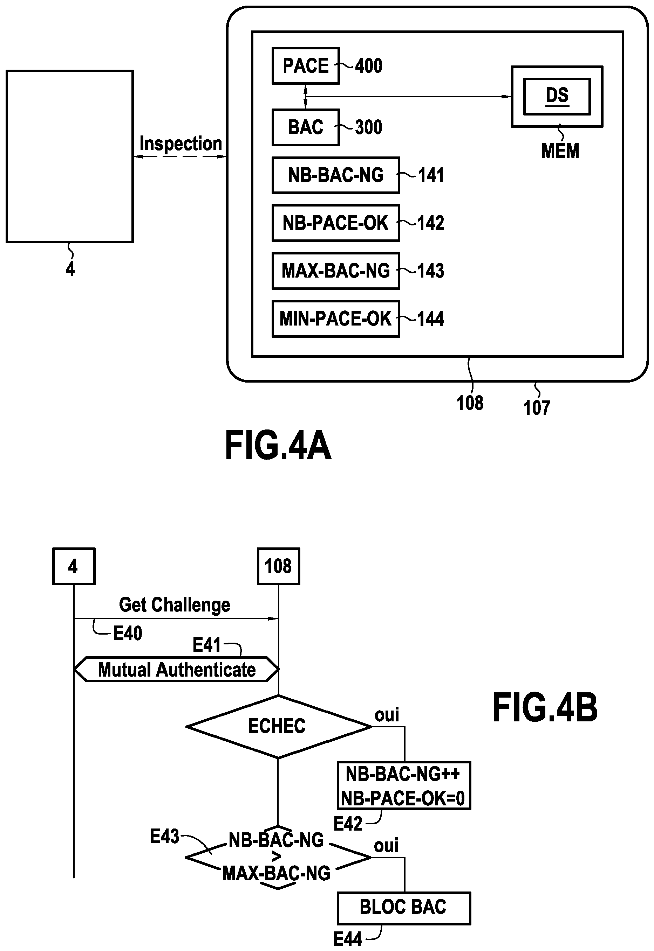

La figure 4A représente un document de voyage 107, comportant un microcircuit 108, ce microcircuit 108 comportant un module 300 apte à mettre en oeuvre le protocole BAC et un module 400 apte à mettre en oeuvre le protocole PACE pour protéger les communications avec un lecteur 4. Chacun de ces protocoles permet d'accéder à des mêmes données sécurisées DS mémorisées dans une mémoire MEM du microcircuit 108.

Ce microcircuit 108 comporte une mémoire non volatile 141 comportant un compteur NB_BAC_NG du nombre d'utilisations du protocole BAC ayant échouées, une mémoire non volatile 142 comportant un compteur NB_PACE_OK du nombre d'utilisations consécutives du protocole PACE ayant réussies, une mémoire non volatile 143 comportant une valeur seuil MAX BAC NG et une mémoire non volatile 144 comportant une valeur seuil MIN_PACE_OK.

Dans cette variante de réalisation, on bloque l'utilisation du protocole BAC lorsque la variable NB_BAC_NG dépasse la valeur seuil MAX_BAC_NG afin de forcer l'utilisation du protocole PACE et on débloque l'utilisation du protocole BAC lorsque la variable NB_PACE_OK dépasse la valeur seuil MIN PACE OK.

Les valeurs NB_BAC_NG et NB_PACE_OK sont initialisées à 0 lorsque le document de voyage est émis.

Dans le mode de réalisation décrit à la figure 4B, la variable NB_BAC_NG est incrémentée d'une unité (étape E42) lors d'un échec de l'étape E41 d'authentification mutuelle, cette étape étant consécutive, comme déjà décrit à une étape E40 d'obtention de défi. La variable NB PACE OK est alors réinitialisée à zéro.

Lorsque la variable NB_BAC_NG dépasse MAX_BAC_NG (étape E43), on bloque l'usage du protocole BAC forçant ainsi l'usage du protocole PACE (étape E44).

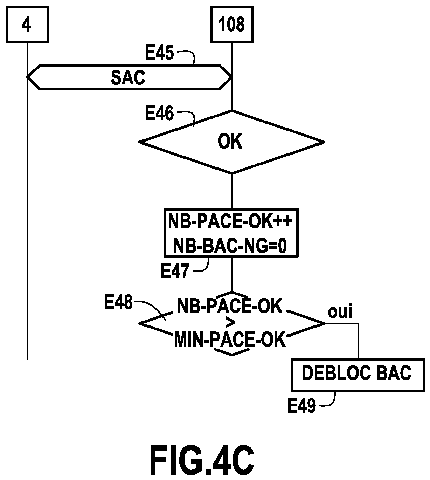

Dans cette variante de réalisation, et comme représenté à la figure 4C, lorsque le protocole PACE est utilisé avec succès (étapes E45 et E46), on incrémente la variable NB_PACE_OK d'une unité et on réinitialise la variable NB_BAC_NG à zéro (étape E47).

Lorsque la variable NB_PACE_OK dépasse MIN_PACE_OK (étape E48) on débloque l'utilisation du protocole BAC (étape E49).

Ainsi, dans cette quatrième variante de réalisation, le protocole BAC n'est bloqué que temporairement, afin de détecter et de prévenir des attaques sur le protocole BAC.

## Revendications

1. Document de voyage (103) comportant un dispositif électronique (104) comportant :
- des moyens (MEM) pour mémoriser au moins une donnée sécurisée (DS) ;
- des moyens pour communiquer avec un lecteur pour la mise en oeuvre d'un premier (300) ou d'un deuxième (400) protocole d'authentification, chacun desdits protocoles étant activable et capable d'accéder à ladite au moins une donnée sécurisée ; et
- des moyens de blocage aptes à bloquer ledit premier protocole mais pas ledit deuxième protocole sur réception d'une information,
le document de travail étant **caractérisé en ce que** :
- ledit dispositif électronique (104) comporte des moyens (122) pour stocker une date de référence (REF_DATE) ; et **en ce que**
- ladite information étant indicative d'une date courante (CURR_DATE), les moyens de blocage étant configurés pour comparer la date courante avec la date de référence et pour bloquer le premier protocole mais pas le deuxième protocole si la date courante dépasse la date de référence.

2. Document de voyage (103) selon la revendication 1, **caractérisé en ce que** ledit dispositif électronique (104) comporte des moyens pour obtenir la date courante à partir des messages utilisés par un troisième protocole.

3. Document de voyage (103) selon la revendication 1, **caractérisé en ce que** ledit dispositif électronique (104) comporte des moyens pour recevoir du lecteur une commande incluant la date courante.

4. Document de voyage (103) selon l'une quelconque des revendications précédentes, dans lequel le document de voyage comprend une mémoire (123) pour mémoriser une variable binaire (BAC2_?) indiquant que le premier protocole est bloqué si la date courante dépasse la date de référence,
le document de voyage étant configuré pour déterminer, à partir de la variable binaire, si le premier protocole est bloqué lorsqu'un lecteur, coopérant avec le document de voyage, cherche à réaliser le premier protocole.

5. Document de voyage (103) selon l'une quelconque des revendications précédentes, **caractérisé en ce que** ledit dispositif électronique (108) comporte des moyens aptes à débloquer ledit premier protocole.

6. Document de voyage (103) selon l'une quelconque des revendications précédentes, **caractérisé en ce que** ledit premier protocole d'authentification est moins sécurisé que ledit deuxième protocole d'authentification.

7. Document de voyage (103) selon l'une quelconque des revendications précédentes, **caractérisé en ce que** ledit premier protocole d'authentification est le protocole Basic Access Control, BAC selon le document 9303 de l'OACI, et ledit deuxième protocole d'authentification est le protocole PACE selon le document TR SAC v1.0 du 11 novembre 2010 de l'OACI.

8. Procédé de sécurisation d'un document de voyage (103) comportant un dispositif électronique comportant des moyens pour mémoriser au moins une donnée sécurisée et des moyens pour communiquer avec un lecteur pour la mise en oeuvre d'un premier ou d'un deuxième protocole d'authentification, chacun desdits protocoles étant activable et capable d'accéder à ladite au moins une donnée sécurisée, ce procédé comportant :
- une étape de réception d'une information ; et
- une étape de blocage dudit premier protocole mais pas dudit deuxième protocole sur réception de ladite information ;
le procédé étant caractérisé en ce ladite information est indicative d'une date courante (CURR_DATE), et en ce que l'étape de blocage comprend une comparaison de la date courante avec une date de référence stockée en mémoire, et le blocage du premier protocole mais pas du deuxième protocole si la date courante dépasse la date de référence.

9. Procédé selon la revendication 8, comprenant une étape de mémorisation de la date courante dans une mémoire du dispositif électronique.

## Patentansprüche

1. Reisedokument (103), das eine elektronische Vorrichtung (104) umfasst mit:
- Mitteln (MEM) zum Speichern wenigstens einer gesicherten Angabe (DS),
- Mitteln zum Kommunizieren mit einem Lesegerät für die Verwendung eines ersten (300) oder eines zweiten (400) Authentifizierungsprotokolls, wobei ein jedes der Protokolle aktivierbar und in der Lage ist, auf die wenigstens eine gesicherte Angabe zuzugreifen, und
- Blockierungsmitteln, die geeignet sind, das erste Protokoll, aber nicht das zweite Protokoll bei Empfang einer Information zu blockieren,
wobei das Reisedokument **dadurch gekennzeichnet ist, dass**:
- die elektronische Vorrichtung (104) Mittel (122) umfasst, um ein Referenzdatum (RET_DATE) zu speichern, und dass
- wenn die Information ein aktuelles Datum (CURR_DATE) anzeigt, die Blockierungsmittel dazu ausgelegt sind, das aktuelle Datum mit dem Referenzdatum zu vergleichen und das erste Protokoll, aber nicht das zweite Protokoll zu blockieren, wenn das aktuelle Datum das Referenzdatum überschreitet.

2. Reisedokument (103) nach Anspruch 1, **dadurch gekennzeichnet, dass** die elektronische Vorrichtung (104) Mittel umfasst, um das aktuelle Datum anhand der durch ein drittes Protokoll verwendeten Nachrichten zu erhalten.

3. Reisedokument (103) nach Anspruch 1, **dadurch gekennzeichnet, dass** die elektronische Vorrichtung (104) Mittel umfasst, um von dem Lesegerät einen das aktuelle Datum einschließenden Befehl zu empfangen.

4. Reisedokument (103) nach einem der vorhergehenden Ansprüche, wobei das Reisedokument einen Speicher (123) zum Speichern einer binären Variablen (BAC2_?), die anzeigt, dass das erste Protokoll blockiert ist, wenn das aktuelle Datum das Referenzdatum überschreitet, umfasst,
wobei das Reisedokument dazu ausgelegt ist, anhand der binären Variablen zu bestimmen, ob das erste Protokoll blockiert ist, wenn ein Lesegerät, das mit dem Reisedokument zusammenwirkt, versucht, das erste Protokoll auszuführen.

5. Reisedokument (103) nach einem der vorhergehenden Ansprüche, **dadurch gekennzeichnet, dass** die elektronische Vorrichtung (108) Mittel umfasst, die geeignet sind, das erste Protokoll freizugeben.

6. Reisedokument (103) nach einem der vorhergehenden Ansprüche, **dadurch gekennzeichnet, dass** das erste Authentifizierungsprotokoll weniger gesichert ist als das zweite Authentifizierungsprotokoll.

7. Reisedokument (103) nach einem der vorhergehenden Ansprüche, **dadurch gekennzeichnet, dass** das erste Authentifizierungsprotokoll das Protokoll Basic Access Control, BAC, gemäß Dokument 9303 der ICAO ist und das zweite Authentifizierungsprotokoll das Protokoll PACE gemäß Dokument TR SAC v 1.0 vom 11. November 2010 der ICAO ist.

8. Verfahren zur Sicherung eines Reisedokuments (103), das eine elektronische Vorrichtung umfasst mit Mitteln zum Speichern wenigstens einer gesicherten Angabe und Mitteln zum Kommunizieren mit einem Lesegerät für die Verwendung eines ersten oder eines zweiten Authentifizierungsprotokolls, wobei ein jedes der Protokolle aktivierbar und in der Lage ist, auf die wenigstens eine gesicherte Angabe zuzugreifen, wobei dieses Verfahren umfasst:
- einen Schritt zum Empfangen einer Information, und
- einen Schritt zum Blockieren des ersten Protokolls, aber nicht des zweiten Protokolls bei Empfang der Information,
wobei das Verfahren **dadurch gekennzeichnet ist, dass** die Information ein aktuelles Datum (CURR_DATE) anzeigt und dass der Blockierungsschritt einen Vergleich des aktuellen Datums mit einem im Speicher gespeicherten Referenzdatum und das Blockieren des ersten Protokolls, aber nicht des zweiten Protokolls, wenn das aktuelle Datum das Referenzdatum überschreitet, umfasst.

9. Verfahren nach Anspruch 8, das einen Schritt zum Speichern des aktuellen Datums in einem Speicher der elektronischen Vorrichtung umfasst.

## Claims

1. Travel document (103) including an electronic device (104) comprising:
- means (MEM) to memorise at least one secure datum (SD);
- means to communicate with a reader to implement a first (300) or second (400) authentication protocol, each of said protocols being able to be activated and capable of accessing said at least one secure datum; and
- blocking means capable of blocking said first protocol but not said second protocol on receipt of information,
the travel document being **characterized in that**:
- said electronic device (104) comprises means (122) to store a reference date (REF_DATE); and **in that**
- said information indicates a current date (CURR_DATE), the blocking means being configured to compare the current date with the reference date and to block the first protocol but not the second protocol if the current date is later than the reference date.

2. The travel document (103) according to claim 1, **characterized in that** said electronic device (104) comprises means to obtain the current date from the messages used by a third protocol.

3. The travel document (103) according to claim 1, **characterized in that** said electronic device (104) comprises means to receive a command including the current date from the reader.

4. The travel document (103) according to any of the preceding claims, wherein the travel document comprises:
a memory (123) to memorise a binary variable (BAC2_?) indicating that the first protocol is blocked if the current date is later than the reference date,
the travel document being configured to determine from the binary variable whether the first protocol is blocked when a reader cooperating with the travel document seeks to carry out the first protocol.

5. The travel document (103) according to any of the preceding claims, **characterized in that** said electronic device (108) comprises means capable of unblocking said first protocol.

6. The travel document (103) according to any of the preceding claims, **characterized in that** said first authentication protocol is less secure than said second authentication protocol.

7. The travel document (103) according to any of the preceding claims, **characterized in that** said first authentication protocol is the Basic Access Control protocol, BAC according to OACI document 9303, and said second authentication protocol is the PACE protocol according to OACI document TR SAC v1.0 of 11 November 2010.

8. Method for securing a travel document (103) including an electronic device comprising means to memorise at least one secure datum and means to communicate with a reader to implement a first or a second authentication protocol, each of said protocols able to be activated and capable of accessing said at least one secure datum, this method comprising:
- a step of receiving an information ; and
- a blocking step of said first protocol but not of said second protocol upon receiving said information;
the method being **characterized in that** said information indicates a current date (CURR_DATE) and **in that** the blocking step comprises a comparison of the current date with a reference date stored in memory, and the blocking of the first protocol but not of the second protocol if the current date is later than the reference date.

9. The method according to claim 8 comprising a memorising step of the current date in a memory of the electronic device.
